# EUROPEAN PATENT APPLICATION

(11) **EP 4 524 009 A1**
(43) Date of publication of application: **19.03.2025**
(21) Application number: 24193339.9
(22) Date of filing: 07.08.2024
(51) Int. Cl.: B62J 43/00, B62J 43/28, B62M 6/90

(54) **ENERGY STORAGE DEVICE HAVING A POSITIONAL SENSOR FOR USE IN A BICYCLE**

(30) Priority: 10.08.2023 US 202318447708
(71) Applicant: SRAM, LLC., Chicago, IL 60607 (US)
(72) Inventor: Sessions, Shelby, Chicago, 60607 (US)
(74) Representative: Thum, Bernhard

(57) **Abstract**

An energy storage device for a bicycle includes a housing moveable between at least a first position and a second position, at least one battery cell disposed in the housing, and a heat sink coupled to the housing. The heat sink is in a heat dissipation position when the housing is in the first position and the heat sink is in a non-heat dissipation position when the housing is in the second position. The energy storage device includes a positional sensor coupled to the housing and configured to sense when the housing is in the second position. In various embodiments, the positional sensor may be configured as an orientation sensor or as a proximity sensor. A bicycle communication system may include a Wi-Fi enabled energy storage system.

## Description

### Field of the Disclosure

The present application generally relates to an energy storage device for a bicycle, and in particular to an energy storage device having a positional sensor, and to methods for assembling and using an energy storage system and communication system on the bicycle.

### Background

Electric assist, or electrically powered, bicycles typically are powered with an energy storage device, such as a battery, connected to an external charge controller that manages a charging voltage and/or charging current. The charge controller requires power, ground, and communication wire connections to the battery. The external charge controller generates heat during the charging of the battery. The external charge controller may include a heat sink or other heat mitigation device, which preferably is exposed to the ambient environment and sufficient air flow to dissipate heat from the heat sink. If the heat sink is blocked, or the air flow is restricted, then the charge controller may be susceptible to overheating.

In addition, many bicycles include a plurality of components, such as electronic seat posts, shifters, derailleurs, etc., that may be adjusted or reconfigured, and which typically are connected to energy storage device(s). Often, the bicycle includes a primary device that handles all pairing and communication between the components and a user interface, such as a smartphone. The primary device communicates with the components to gather status information from the components and/or transmit new configuration data to the components. The primary device typically communicates with an application on the user interface via Bluetooth. Any changes that the user makes to the system configuration are transmitted to the primary device over Bluetooth and then to the relevant components. Any system information received by the user on the user interface may thereafter be transmitted from the smartphone app to one or more remote servers via the internet. Conversely, the server(s) may transmit configuration information to the user interface, which is then communicated to the primary device and components. In this system, if the user is out of Bluetooth range of the primary device, then the user may not retrieve and view current status information or make system changes through reconfiguration.

### Summary

In one aspect, one embodiment of an energy storage device for a bicycle includes a housing moveable between at least a first position and a second position, at least one battery cell disposed in the housing, and a heat sink coupled to the housing. The heat sink is in a heat dissipation position when the housing is in the first position and the heat sink is in a non-heat dissipation position when the housing is in the second position. The energy storage device includes a positional sensor coupled to the housing and configured to sense when the housing is in the second position. In various embodiments, the positional sensor may be configured as an orientation sensor or as a proximity sensor.

In another aspect, one embodiment of a method of charging an energy storage device includes connecting a power source to the energy storage device, wherein the energy storage device comprises a heat sink, sensing a first position of the energy storage device with a positional sensor, charging the energy storage device at a first charge rate if the first position of the energy storage device corresponds to the heat sink being in a heat dissipation position, moving the energy storage device to a second position, sensing the second position of the energy storage device with the positional sensor, and charging the energy storage device at a second charge rate less than the first charge rate if the second position of the energy storage device corresponds to the heat sink being in a non-heat dissipation position. In various embodiments, the positional sensor may be configured as an orientation sensor or as a proximity sensor.

In another aspect, one embodiment of a bicycle communication system includes a Wi-Fi enabled energy storage system. The Wi-Fi enabled energy storage system includes at least one battery cell, a battery management system operably coupled to the at least one battery cell, a charge controller configured to control a charge current supplied to the at least one battery cell from a power source, and a Wi-Fi component configured to enable the energy storage device to communicate with a remote server.

The various embodiments of the energy storage device, and methods for the use and assembly thereof, provide significant advantages over other energy storage devices, bicycles, and methods. For example, and without limitation, the positional sensor is able to sense when the heat sink is not in a non-heat dissipation position and derate the charge current so that the battery does not overheat.

The communication system also allows a Wi-Fi enabled energy storage device to communicate with a user interface, such as a smartphone, via a server, and thereby provide the user with status information, including for example and without limitation that the charging speed has been derated, and/or information about other components in communication with the Wi-Fi enabled energy storage device. In addition, the user is able to configure the Wi-Fi enabled storage device, or other components in communication therewith, via the server and a Wi-Fi connection.

The foregoing paragraphs have been provided by way of general introduction and are not intended to limit the scope of the claims presented below. The various preferred embodiments, together with further advantages, will be best understood by reference to the following detailed description taken in conjunction with the accompanying drawings.

### Brief Description of the Drawings

Objects, features, and advantages of the present invention will become apparent upon reading the following description in conjunction with the drawing figures, in which:
FIG. 1 is a side view of a bicycle with a drive unit and energy storage device.
FIG. 2 is a perspective view of an energy storage device.
FIG. 3 is a side view of the energy storage device shown in Figure 2.
FIG. 4 is a cross-sectional view of the energy storage device taken along line 4-4 in Figure 3.
FIG. 5 is an enlarged partial view of the charge controller taken along line 5-5 in Figure 4.
FIG. 6 is a flow chart showing a charging process of an energy storage device configured with an orientation sensor.
FIG. 7 is a flow chart showing a charging process of an energy storage device configured with a proximity sensor.
FIG. 8 is a block diagram of an energy storage device configured with an orientation sensor.
FIG. 9 is a block diagram of an energy storage device configured with a proximity sensor.
FIG. 10 is a block diagram of a bicycle communication system.
FIG. 11 is a flow chart showing a communication of status information from one or more bicycle components and/or Wi-Fi enabled device to a user.
FIG. 12 is a flow chart showing a communication of configuration data from a user to a Wi-Fi enabled device and one or more bicycle components.

### Detailed Description of the Disclosure

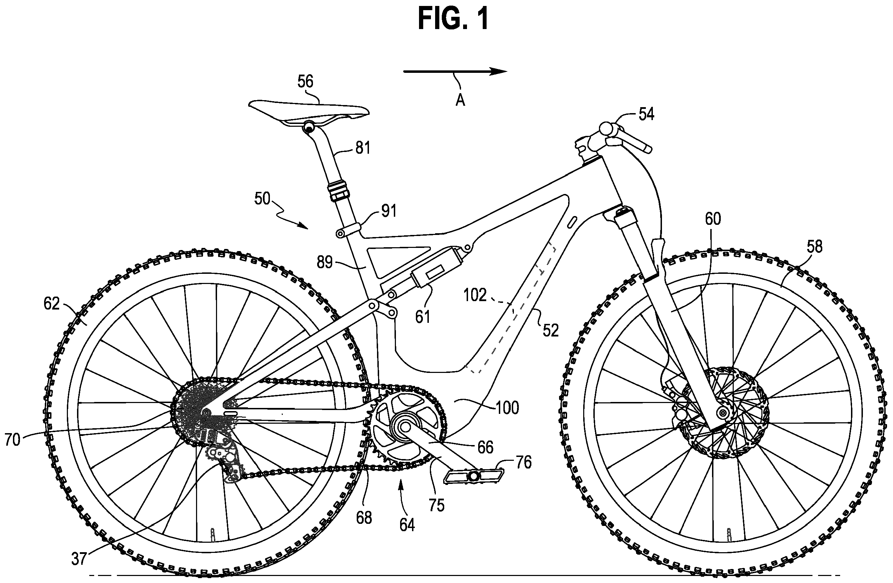

It should be understood that the term "plurality," as used herein, means two or more. The term "longitudinal," as used herein means of or relating to a length or lengthwise direction. The term "lateral," as used herein, means situated on, directed toward or running in a side-to-side direction. The term "coupled" means connected to or engaged with, whether directly or indirectly, for example with an intervening member, and does not require the engagement to be fixed or permanent, although it may be fixed or permanent. The term "connected" may refer to an electrical or mechanical connection. The term "communicating" refers to a connection allowing for the transfer of power and/or data, and may include a wired or wireless connection. The terms "first," "second," and so on, as used herein are not meant to be assigned to a particular component so designated, but rather are simply referring to such components in the numerical order as addressed, meaning that a component designated as "first" may later be a "second" such component, depending on the order in which it is referred. It should also be understood that designation of "first" and "second" does not necessarily mean that the two components or values so designated are different, meaning for example a first direction may be the same as a second direction, with each simply being applicable to different components. The terms "upper," "lower," "rear," "front," "fore," "aft," "vertical," "horizontal," "right," "left," "inboard," "outboard" and variations or derivatives thereof, refer to the orientations of an exemplary bicycle 50, shown in FIG. 1, from the perspective of a user seated thereon, for example with an "inboard" component or feature being closer to a vertical mid-plane of the bicycle 50 extending in a direction A. The term "transverse" means non-parallel. The terms "outer" and "outwardly" refers to a direction or feature facing away from a centralized location, for example the phrases "radially outwardly," "radial direction" and/or derivatives thereof, refer to a feature diverging away from a centralized location. Conversely, the terms "inward" and "inwardly" refers to a direction facing toward the centralized or interior location. The term "subassembly" refers to an assembly of a plurality of components, with subassemblies capable of being further assembled into other subassemblies and/or a final assembly, such as the bicycle 50.

FIG. 1 illustrates one example of a human powered vehicle, which may also include an electrically powered drive system. In this example, the vehicle is one possible type of bicycle 50, such as a electric bicycle ("E-bike"). In alternate embodiments, the bicycle may be a mountain bicycle, a gravel bicycle, a road bicycle, other bicycle, or any combination thereof. The bicycle 50 has a frame 52, handlebars 54 near a front end of the frame 52, and a seat or saddle 56 for supporting a rider over a top of the frame 52. The bicycle 50 also has a first or front wheel 58 carried by a front fork subassembly 60 supporting the front end of the frame 52. The bicycle 50 also has a second or rear wheel 62 supporting a rear end of the frame 52. The rear end of the frame 52 may be supported by a rear suspension component 61, such as a rear shock. The bicycle 50 has a drive train 64 with a crank assembly 66 that is operatively coupled via a roller chain 68 to a rear cassette 70 or a driven sprocket assembly near the hub providing a rotation axis of the rear wheel 62. The crank assembly 66 includes at least one, and typically two, crank arms 75 and pedals 76. A crank spindle or shaft may connect the two crank arms. The crank shaft defines a center rotational axis of the chainring assembly. The crank assembly 66 may also include other components.

A rear gear change device 37, such as a derailleur, is disposed at the rear wheel 62 to move the roller chain 68 through different sprockets of the cassette 70. In one embodiment, a front gear changer device (not shown), such as a derailleur, may be provided to move the chain 68. In the illustrated example, the saddle 56 is supported on a seat post 81 having an end portion received in a top of a frame seat tube 89 of the frame. A clamping ring 91 may be tightened to secure the upper seat post 81 to the lower frame seat tube 89. In FIG. 1, the arrow A depicts a normal riding or forward moving direction of the bicycle 50.

Referring to FIG. 1, the bicycle 50 includes a drive unit 100 mounted on the frame 52 and coupled to the crank assembly 66. The drive unit 100 may be powered to assist, partially or entirely, with the rotation of the crank assembly 66, the associated movement of the chain 68, and/or the associated rotation of the cassette 70 and rear wheel 62. The drive unit 100 may be electrically coupled to an energy storage device 102, for example and without limitation a battery, which supplies power to the drive unit 100.

Referring to FIGS. 1-5, the energy storage device 102 may be releasably coupled, both mechanically and electrically, to the drive unit 100 and/or bicycle frame 52. The energy storage device 102 includes a contact connection that may be connected to, or engaged with, the drive unit 100 by way of a drive unit contact connection, which may include one or more wires and a connector. The battery contact connection on the energy storage device 102 contacts, and is engaged by, the corresponding contact on the drive unit, or frame 52, which may be defined by a pair of prongs, wires or other electrical contacts. The energy storage device 102 may be secured to the drive unit 100 and/or frame 52, and held in place to maintain an electrical connection, with a mounting arrangement, for example a sliding interface, and may include one or more latches, detents, tabs and/or other fasteners. The mounting arrangement may be defined by the shape of the energy storage device housing 122 and the interface between the housing 122, and/or drive unit 100. The phrase "mounting arrangement" refers to any structure that maintains the position of the energy storage device 102 relative to the frame 52 and/or drive unit 100, and may include the interface between the housing 122 and the frame 52 and/or drive unit 100, including the interface between the contacts, and/or may include additional fasteners, such as bolts, tabs, clips, snaps, detents, insert/socket interfaces and/or other suitable connectors. The energy storage device 102, and the housing 122 in particular, is releasably connected to the frame 52 and/or drive unit 100, meaning the energy storage device 102 and housing 122 may be moved from an engaged position to a disengaged position, and may be replaced with another energy storage device 102 or reinstalled, for example after charging if performed remotely.

The housing 122 may be configured with a pair of laterally spaced apart opposite sidewalls 130, or covers, and a peripheral wall 132 extending between and connected to the sidewalls 130. One or more of the peripheral wall 132 and sidewalls 130 may define a shell, which is covered by the other sidewall, with the sidewalls 130 each defining a cover. The side walls 130 may be coupled to the peripheral wall 132 with one or more fasteners 133, shown as screws, or adhesive, snap-fit, tabs, clips and/or other suitable fasteners 133. The housing 122 may include one or more charge ports 125, including the battery contact connection. In one embodiment, the energy storage device 102 may include a first charge port 125 configured as a DC charge port, including for example a pair of electrical contacts, with the charge port 125 also defining the motor connection.

The sidewalls 130 and peripheral wall 132 define an interior cavity 166 of the housing 122. The energy storage device 102 includes a plurality of battery cells 170 disposed or located in the housing 122, and in the interior cavity 166 of the housing 122 in particular. The battery cells 170 are individual cells that are connected in series and parallel to create a battery pack 172. Battery pack cell configurations are described by the number of cells 170 in series and the number of cells 170 in parallel. There are many possible cell configurations that may be suitable for use in the energy storage device 102, including for example and without limitation 10S-3P, 13S-2P and 16S-2P configurations.

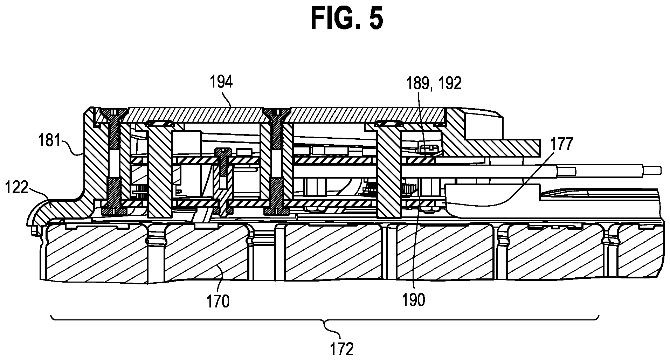

Referring to FIGS. 5, 8 and 9, the energy storage device 102 may include a battery management system (BMS) 174 disposed in the housing 122. The BMS 174 may be mounted on a printed circuit board (PCB) 177 disposed in the housing 122. The PCB 177 overlies and has contacts forming electrical connections with the battery pack 172. The PCB 177 may be disposed or mounted in the interior 166 of the housing 122, for example in an enlarged side portion 181. The BMS 174 connects to the cells 170 in the battery pack 172 to monitor the voltage of the cells 170 for faults. The BMS 174 also measures the current into and out of the battery pack 172 to protect against over current faults. The BMS 174 may communicate with temperature sensors 185 that are distributed throughout the battery pack 172 to monitor the temperature of the battery pack 172 during charge and discharge to prevent damage to the battery pack 172 due to overheating. Using all of this information, the BMS 174 may control charge and discharge field-effect transistors (FETS) to either connect or disconnect the battery pack 172 from the rest of the system during charge and discharge. The BMS 174 receives configuration information from a microcontroller 178 and radio 180. Configuration information may include charge/discharge current limits, individual cell voltage limits, and over/under temperature limits, which may be preset by the microcontroller firmware. The configuration information may also be updated via a firmware update or dynamically based on information received by the microcontroller 178 from other systems on the bicycle 50, received for example wirelessly by the radio 180.

In one embodiment, the energy storage device 102 includes a charge controller 192 disposed in the housing 122, and mounted on the PCB 177 or a separate PCB 189. The charge controller 192 may be connected to a DC power source and modulate the DC power to safely charge the battery pack 172. In the case of a lithium ion battery pack 172, the charge controller 192 supplies a constant current to the battery cells 170 of the packs 172 until a target voltage is reached, then the charge controller 192 supplies constant voltage while the current slowly goes down to zero. During charging, the charge controller 192 communicates with and receives messages from the battery management system 174 and the microcontroller 178, such that the charge controller 192 may modulate the charge current to provide a fast and safe charge based on the state of the battery.

The microcontroller 178 may be disposed in the housing 122, or interior cavity 166 thereof, and be mounted on the PCB 177, 189. The microcontroller 178 may receive data from the BMS 174, the charge controller 192, an inertial measurement unit (IMU) 190, and/or smartphone app via wireless or wired communication. The IMU 190 may also be mounted on one or the other of the PCB 177, 189. The microcontroller 178 uses the data to make determinations about how fast to charge the battery pack 172, how much power to supply from the charge port 125, if connected, whether the energy storage device 102 has been dropped when not installed in the bicycle 50, when to display battery state of charge with indicators (e.g., LED's), and/or when to enable the output of the energy storage device 102. A smartphone app may receive information about the energy storage device 102 via the microcontroller 178 and radio 180. Some of the information that may be transmitted to the user interface 306 such as a smart phone, configured with a human/machine interface (HMI), may be the state of charge, estimated time to charge, faults, temperature of the energy storage device 102, voltages of individual cells 170, total battery pack 172 voltage, and the health of battery pack 172. The smartphone app may also transmit configuration information from the user interface 306 to the energy storage device 102.

The energy storage device 102 may also include indicators, configured in one embodiment as an array of LEDs mounted on the PCB 177, with the LEDs being visible to a user through or on the exterior of the housing 122. The indicators may be a collection of red/blue/green (RGB) LEDs that may be used to display the state of charge, error messages, or general bicycle alerts. The LED's may be activated depending on whether the energy storage device 102 has been installed, via a battery installation detection device, or by the IMU 190. Indications may also be transmitted to the user via the smartphone app. A push notification for faults may alert the user in more detail of what has caused the energy storage device 102 to fail. Inside the app, battery state of charge and health may be displayed on the component screen. In one embodiment, a plurality of indicators provides various indications. There are several potential ways that these LEDs may be used to indicate state of charge (SOC) and faults to the user. For example, a SOC indication may be provided when the energy storage device 102 is not installed into the bicycle 50, and may be triggered for example when the energy storage device 102 is picked up or otherwise moved, with the movement being detected by the IMU 190.

The energy storage device 102 may include a sensor disposed in or on the housing 122, which detects whether the device has been installed on the bicycle 50. The sensor may include a contact, force and/or spatial sensor, and may be a magnetic, button, NFC, IR sensor, or any other type of sensor, whether electrical or mechanical.

The IMU 190 may be disposed in or on the housing 122, and may be mounted on the PCB 177. The IMU 190 contains an accelerometer, gyroscope, and/or magnetometer. The IMU 190 may use these three sensors to determine the position or orientation of the energy storage device 102 in space, and the relative movement thereof. The IMU 190 may communicate with the microcontroller 178 to track if the energy storage device 102 has had any impacts when not installed on the bicycle 50. If an impact has been detected, additional safety checks may be performed to ensure the energy storage device 102 is still safe to use. Data from the IMU 190 may also be transmitted via the radio 180 to other components on the bicycle 50.

The internal charge controller 192 allows for an arbitrary voltage and current source to be applied to the output terminals of the battery or applied to a charge port located on the bicycle frame when the battery is installed in the bike to provide the charging current. Another charge current source may provide via a USB C port located on the battery or on the bicycle frame. Because the charge controller 192 is located on the battery pack 172, the heat generated from the charge controller 192 must be removed from the system.

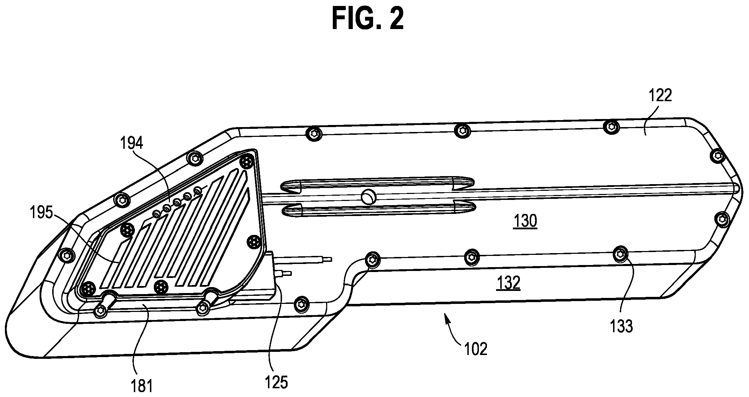

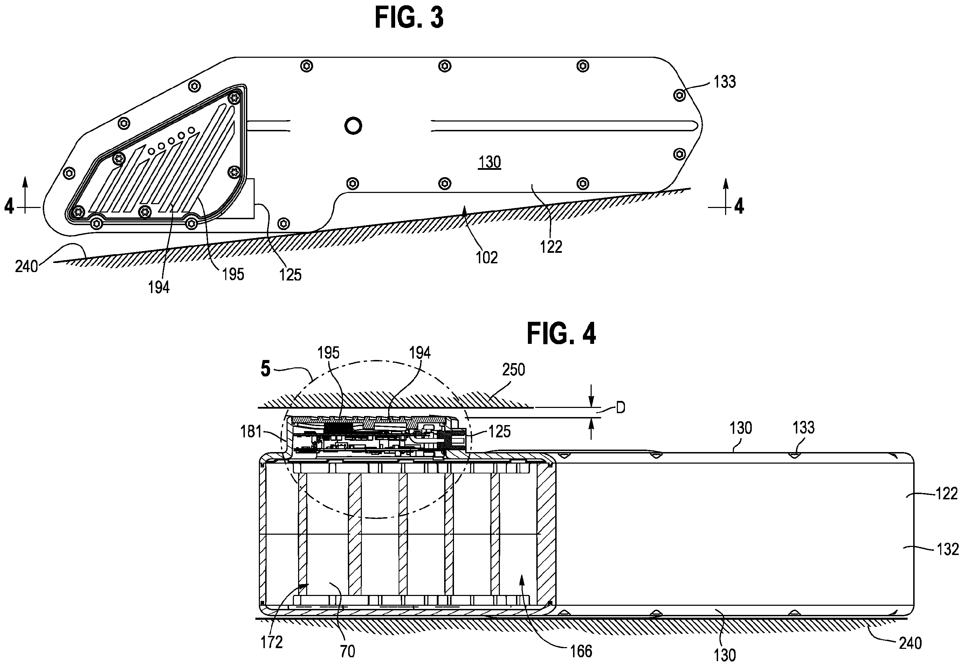

Referring to FIGS. 2-5, a heat sink 194 is coupled to the housing 122, for example to one of the side walls 130 in an overlapping relationship with the charge controller 192 on one or more sides of the battery pack 172 that is thermally connected to the charge controller 192 electronics. In one embodiment, the heat sink 194 is configured as a metal plate, which may have grooves 195 or fins on an exterior surface to increase an exposed surface area thereof. More than one heat sink 194 may be coupled to the housing adjacent the charge controller 192. In order for the heat sink(s) 194 to properly dissipate heat from the charge controller 192, the heat sink(s) 194 is preferably exposed to the air in a heat dissipation position and not facing down towards the ground 240 in a non-heat dissipation position. For example, the heat sink 194 may face upwardly, or away from the ground 240, as shown in FIG. 4 or sideways as shown in FIG. 3, all of which are heat dissipation positions.

In one embodiment, shown in FIG. 3, 4 and 9, the IMU 190 is configured as a positional sensor. A "positional sensor" is a sensor that measures or senses the orientation of the energy storage device 102 and/or heat sink 194 (i.e., an orientation sensor such as the IMU 190), or the proximity of the energy storage device 102 and/or heat sink 194 relative to a blocking component 250 (i.e., a proximity sensor 196). The phrase "blocking component" refers to any component 250, such as a wall, furniture component, or other surface that may be positioned adjacent the heat sink 194 so as to impede or adversely affect the heat dissipation function. The IMU 190, or orientation sensor, may measure the orientation of the energy storage device 102 and detect when the heat sink(s) 194 are facing toward or away from the ground 240. The orientation sensor 190 is configured to signal the charge controller 192 when the housing 122 is in the position where the heat sink 194 is in a non-heat dissipation position and/or a heat dissipation position. When the heat sink(s) 194 are facing toward the ground 240, the charge controller 192, in response to the signal from the positional sensor, will derate the charge current to prevent the charge controller 192 and/or battery cells 170 from overheating during charging. The microcontroller 178 may include a radio 180 that may communicate to or with one or more bicycle components, including without limitation an adjustable seat post, front and/or rear derailleurs, torque sensors, shock absorber(s), shifter(s), etc., which alone or in combination may define a component network 310, or the energy storage device(s) 102 used to power those components, and may communicate with the user interface 306, such as a smartphone. If the energy storage device 102 is positioned such that the heat sink 194 is facing downwardly while the energy storage device 102 is being charged, then the radio 180 may send a message to the user interface 306 informing the user that charging will be derated if the energy storage device 102 is not moved, e.g., rotated, to another position such that the heat sink(s) 194 are facing towards an open air environment, for example upwardly or sidewardly. The user, or someone at their direction, may move the housing 122, for example by rotating the housing 122, to a position where the heat sink 194 is in a heat-dissipation position. In this way, the housing 122 is moveable, e.g., rotatable, between first and second positions corresponding to the heat dissipation and non-heat dissipation positions of the heat sink 194. In other embodiments, if the energy storage device 102 is mounted on the bicycle 50, the bicycle 50 may be manipulated to reposition the housing 122 and heat sink(s) 194.

In another embodiment, shown in FIGS. 3-5 and 9, the positional sensor is configured as a proximity sensor 196. In one embodiment, the proximity sensor 196 is configured as a capacitive sensor that uses the heat sink(s) 194 as the sensor node. When the heat sink 194 is located near a surface of the blocking component 250 (as shown for example in FIG. 4), such as the ground 240, a wall, or other surface, the relative capacitance between the heat sink 194 and a ground plane of the battery PCBs 177, 189 will change. This change in capacitance is detectable using an integrated circuit or analog hardware, with the charge controller 192 thereafter derating the charge current to prevent the charge controller 192 and/or battery cells 170 from overheating during charging in response to a signal received from the proximity sensor 196. The proximity sensor 196 is configured to signal the charge controller 192 when the housing 122 is in the position where the heat sink 194 is in a non-heat dissipation position and/or a heat dissipation position. In one embodiment, the heat sink 194 is positioned a distance (D) relative to a blocking component 250. D is less than or equal to 10 cm when the housing 122 is in a position corresponding to the heat sink 194 being in a non-heat dissipation position. The distance (D) may also be less than or equal to 5 cm, 15 cm or 30 cm depending on the configuration of the heat sink. It should be understood that the energy storage device 102 may be configured with more than one positional sensor, and may be configured with one or more orientation sensors 190 and one or more proximity sensors 196. Other suitable proximity sensors 196 may include without limitation magnetic, optical (e.g., infrared, photoelectric, etc.), ultrasonic, fiber optic and/or Hall effect sensors.

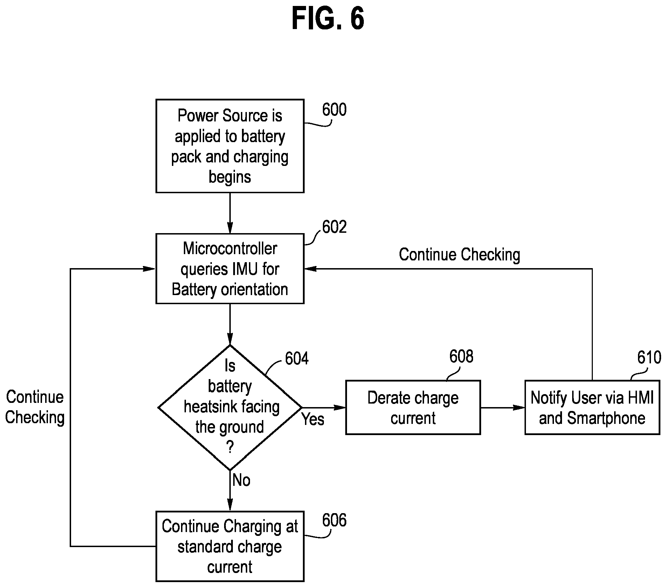

Referring to FIGS. 6, 8 and 9, in operation, e.g., in act 600, a charge source 183 is connected to the energy storage device 102 and charging begins. In act 602, the microcontroller 178 queries the orientation sensor 190 to determine whether the energy storage device 102 is in a position corresponding to the heat dissipation position of the heat sink 194. In act 604, the orientation sensor 190 signals whether the heat sink 194 is facing downwardly, e.g., toward the ground 240, in a non-heat dissipation position, and if not, in act 606, then charging at the previous, normal rate may continue. If in act 604, the orientation sensor 190 signals that the heat sink 194 is in the non-heat dissipation position, then in act 608, the controller 192 derates, or reduces, the charge rate while in act 610 the user is notified that the charge rate has been reduced and/or that the energy storage device 102, and heat sink 194 in particular, are in a non-heat dissipation position. The user, or someone at their direction, may then reposition the energy storage device 102 such that the heat sink 194 is in a heat dissipation position. In a subsequent act 602, the microcontroller 178 may again query the orientation sensor 190 about the position of the housing 122 and heat sink 194.

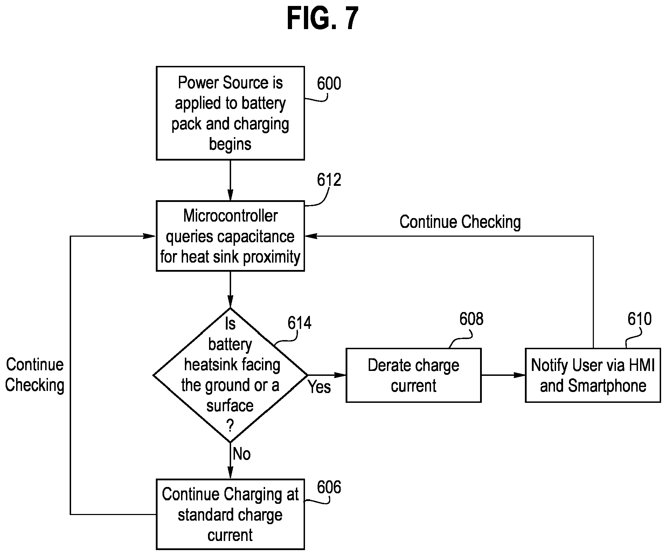

Referring to FIG. 7, in operation, e.g., in act 600, a charge source 183 is connected to the energy storage device 102 and charging begins. In act 612, the microcontroller 178 queries the proximity sensor 196 to determine whether the energy storage device 102 is in a position wherein the heat sink 194 is in non-heat dissipation position, for example at a distance D<10cm, or less, relative to a surface of a blocking component 250. In act 614, the proximity sensor 196 signals whether the heat sink 194 is positioned too close to the blocking component 250 in the non-heat dissipation position, and if not, in act 606, then charging at the previous, normal rate may continue. If in act 614, the proximity sensor 196 signals that the heat sink 194 is in the non-heat dissipation position, then in act 608, the controller 192 derates, or reduces, the charge rate while in act 610 the user is notified that the charge rate has been reduced and/or that the energy storage device 102, and heat sink 194 in particular, are in a non-heat dissipation position. The user, or someone at their direction, may then reposition the energy storage device 102 such that the heat sink 194 is in a heat dissipation position, with the heat sink 194 positioned a distance D>10cm. In a subsequent act 612, the microcontroller 178 may again query the proximity sensor 196.

### Bicycle Communication System

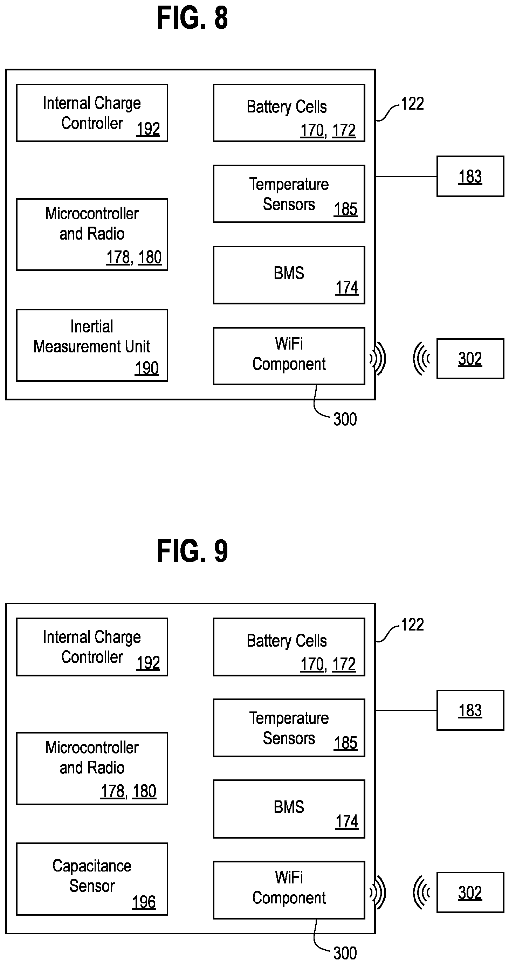

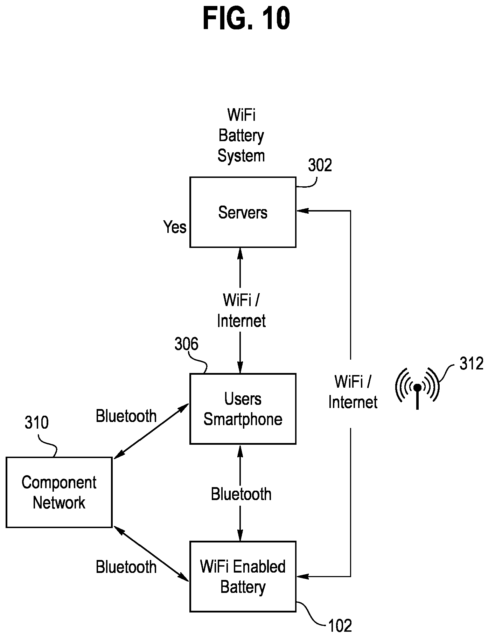

Referring to FIGS. 8-12, the energy storage device 102 is Wi-Fi enabled, meaning the energy storage device 102 is configured as a W-Fi enabled device (WED). In one embodiment, the Wi-Fi enabled energy storage device 102 is configured with a Wi-Fi component 300, for example a radio 180 or chip, and may be integrated into the microcontroller 178, which enables the energy storage device 102 to communicate with a remote server 302. It should be understood that other devices, or components on the bicycle 50, may be Wi-Fi enabled devices (WEDs). If the user interface 306 is remote, or not within Bluetooth range of the Wi-Fi enabled energy storage device 102, or components defining a component network 310 in communication therewith, but a known Wi-Fi network 312 is present, then all status information and configuration data for the paired system information may be directly transmitted to and between the Wi-Fi enabled energy storage device 102 and the remote server(s) 302 via the internet and Wi-Fi network 312. The user is then able to open an app on their internet 312 connected user interface 306, e.g., smartphone, and view current status information about their bicycle 50 including for example and without limitation a state of charge of the energy storage device 102, or other components in the component network 310, including their respective energy storage devices 102 and state of charges. At the same time, the user, via the user interface 306 and app, is able to transmit configuration data from the user interface 306 to the server 302 and then to the Wi-Fi enabled energy storage device 102, all without being in range of a Bluetooth connection with the Wi-Fi enabled storage device 102 or component network 310.

If the user interface 306 is in Bluetooth range, then the Wi-Fi enabled energy storage device 102 and any components in the component network 310 may communicate with the user interface 306 via Bluetooth. Any changes that the user makes to the system configuration is transmitted back to the Wi-Fi enabled energy storage device 102 over Bluetooth and then to the relevant components, or alternatively directly to the components. Any system information received by the user on the user interface 306 may thereafter be transmitted from the smartphone app to one or more remote servers 302 via the internet 312. Conversely, the server 302 may transmit configuration information to the user interface 306, which is then communicated to the Wi-Fi enable energy storage device 102 and components in the component network 310. The bicycle communication system may include at least one bicycle component configured to communicate status information to the Wi-Fi enabled energy storage device 102. In one embodiment, the at least one bicycle component includes a plurality of bicycle components, or the component network 310, each configured to communicate status information to the Wi-Fi enabled energy storage device 102.

Data transmitted between the Wi-Fi enabled energy storage device 102 and the remote server 302 can include, but is not limited to, the energy storage device state of charge, the energy storage device charge current, the estimated time to charge completion, the estimated time to charge completion if the energy storage device is rotated such that the heat sink can properly dissipate heat, the temperature of the energy storage device, the orientation of the energy storage device relative to ground, and/or historical discharge current and temperature data. If the energy storage device has a proximity sensor, then data regarding the distance of the energy storage device to a surface may also be transmitted.

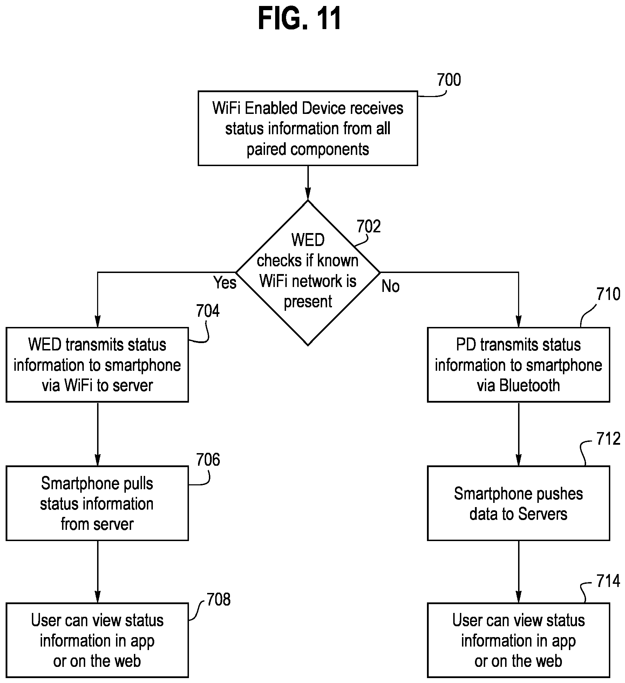

Referring to FIG. 11, in operation, e.g., in act 700, the Wi-Fi enabled device, e.g., the Wi-Fi enabled energy storage device 102, receives status information from one or more pair components, or component network 310. In act 702, the Wi-Fi enabled device 102 determines whether a known Wi-Fi network 312 is present or in range. If yes, then in act 704, the Wi-Fi enabled device 102 transmits the status information to the server 302, and then to the user interface 306, e.g., user's smartphone. In act 706, the user interface 306 pulls status information from the server 302. In act 708, the user is able to view the status information using an app on the user interface 306. If in act 702, no Wi-Fi network 312 is detected, then in act 710, the energy storage device 102 transmits the status information to the user interface 306 via Bluetooth, while in act 712, the user interface 306 transmits the status information to the server 302. In act 714, the user may view the status information via an app or on the web.

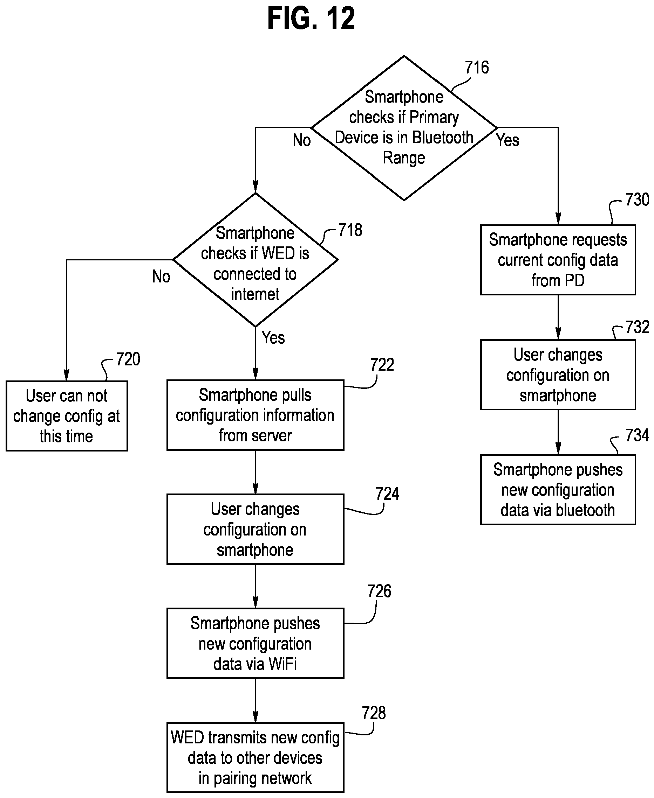

Referring to FIG. 12, in operation, e.g., in act 716, the user interface 306 checks whether the energy storage device 102, or other Wi-Fi enabled device 102, is in Bluetooth range, and if not, in act 718, the user interface 306 checks whether the Wi-Fi enabled device (WED), e.g., the Wi-Fi enabled energy storage device 102, is connected to the internet 312. If not, then in act 720, the user is prevented from reconfiguring the WED or component. If the WED is connected to the internet 312, then in act 722, the user interface 306 may retrieve configuration information from the server 302, in act 724 the user may change the configuration, in act 726 the new configuration data is communicated to the WED via the server 302, and in act 728, the WED transmits the new configuration data to the paired component(s) 310. In act 730, if the user interface 306 is within Bluetooth range of the WED, then the user interface 306 requests the current configuration data from the WED, in act 732 the user changes the configuration, and in act 734 the user interface 306 transmits the new configuration data to the WED and/or component(s) 310 via Bluetooth.

In various embodiments, dedicated hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The radio 180, or one embodiment of a communication interface, provides for data and/or signal communication from the energy storage device 102 to another component of the bicycle 50, or an external device such as a mobile phone or other computing device. The communication interface communicates the data using any operable connection. An operable connection may be one in which signals, physical communications, and/or logical communications may be sent and/or received. An operable connection may include a physical interface, an electrical interface, and/or a data interface. The communication interface may be configured as the wireless communication system which communicates wirelessly, and as such may include one or more antennae. The communication interface provides for wireless communications in any now known or later developed format. Although the present specification describes components and functions that may be implemented in particular embodiments with reference to particular standards and protocols, the invention is not limited to such standards and protocols. For example, standards for Internet 312 and other packet switched network transmission (e.g., TCP/IP, UDP/IP, HTML, HTTP, HTTPS) represent examples of the state of the art. Such standards are periodically superseded by faster or more efficient equivalents having essentially the same functions. Bluetooth^{®} and or ANT+^{™} standards may also, or alternatively, be used. Accordingly, replacement standards and protocols having the same or similar functions as those disclosed herein are considered equivalents thereof. In an embodiment, the communication interface may be configured to transmit a signal indicative of a power determined from a measured strain of a body. Further, the determined power may be transmitted wirelessly.

The HMI on the user interface may be one or more buttons, keypad, keyboard, mouse, stylus pen, trackball, rocker switch, touch pad, voice recognition circuit, or other device or component for communicating data between a user and the energy storage device 102. The HMI may be a touch screen, which may be capacitive or resistive. The HMI may include a liquid crystal display (LCD) panel, light emitting diode (LED), LED screen, thin film transistor screen, or another type of display. The HMI may also include audio capabilities, or speakers.

In an embodiment, the HMI includes an LED indicator. The LED indicator lights to indicate input of the commands or other actions of the power meter system.

The HMI is configured to send and/or receive data such as control signals and/or commands to and/or from bicycle components such as the rear gear changer 37, seat post 81, shifters, shock absorber or other reconfigurable components. The HMI communicates the data using any operable connection. An operable connection may be one in which signals, physical communications, and/or logical communications may be sent and/or received. An operable connection may include a physical interface, an electrical interface, and/or a data interface. The HMI provides for wireless communications in any now known or later developed format. Although the present specification describes components and functions that may be implemented in particular embodiments with reference to particular standards and protocols, the invention is not limited to such standards and protocols. For example, standards for Internet 312 and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

In accordance with various embodiments of the present disclosure, methods described herein may be implemented with software programs executable by a computer system, such as the circuitry. Further, in an exemplary, non-limited embodiment, implementations can include distributed processing, component/object distributed processing, and parallel processing. Alternatively, virtual computer system processing can be constructed to implement one or more of the methods or functionality as described herein.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

As used in this application, the term 'circuitry' or 'circuit' refers to all of the following: (a) hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server 302, to perform various functions) and (c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware, as well as other electronic components. The term "circuitry" would also cover, for example and if applicable to the particular claim element, a baseband integrated circuit or applications processor integrated circuit for a mobile computing device or a similar integrated circuit in server 302, a cellular network device, or other network device.

Processors suitable for the execution of a computer program include, by way of example, both general and special purpose microprocessors, and any one or more processors of any kind of digital computer. Generally, a processor receives instructions and data from a read only memory or a random-access memory or both. The essential elements of a computer are a processor for performing instructions and one or more memory devices for storing instructions and data. Generally, a computer also includes, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, or a power meter system to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations and/or acts are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that any described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

Although embodiments have been described for illustrative purposes, those skilled in the art will appreciate that various modifications, additions, and substitutions are possible, without departing from the scope and spirit of the disclosure. It is therefore intended that the foregoing description be regarded as illustrative rather than limiting, and that it be understood that all equivalents and/or combinations of embodiments and examples are intended to be included in this description.

Although certain parts, components, features, and methods of operation and use have been described herein in accordance with the teachings of the present disclosure, the scope of coverage of this patent is not limited thereto. On the contrary, this patent covers all embodiments of the teachings of the disclosure that fairly fall within the scope of permissible equivalents.

## Claims

1. An energy storage device for a bicycle comprising:
a housing moveable between at least a first position and a second position;
at least one battery cell disposed in the housing;
a heat sink coupled to the housing, wherein the heat sink is in a heat dissipation position when the housing is in the first position and the heat sink is in a non-heat dissipation position when the housing is in the second position; and
a positional sensor coupled to the housing and configured to sense when the housing is in the second position.

2. The energy storage device of claim 1, wherein the positional sensor comprises an orientation sensor,
wherein as an optional feature the orientation sensor comprises an inertial measurement unit.

3. The energy storage device of claim 1 or 2, wherein the heat sink is facing downwardly when the housing is in the second position.

4. The energy storage device of one of the preceding claims, wherein the positional sensor comprises a proximity sensor,
wherein as an optional feature the proximity sensor comprises a capacitive sensor.

5. The energy storage device of one of the preceding claims, wherein the heat sink is positioned a distance less than or equal to 10 cm from a blocking component when the housing is in the second position.

6. The energy storage device of one of the preceding claims, further comprising a charge controller disposed in the housing,
wherein as an optional feature the heat sink is thermally coupled to the charge controller.

7. The energy storage device of claim 6, wherein the positional sensor is operably coupled to the charge controller, wherein the positional sensor is configured to signal the charge controller when the housing is in the second position.

8. The energy storage device of claim 7, further comprising a power source electrically coupled to the at least one battery cell, wherein the charge controller is configured to derate a charge current supplied to the at least one battery cell from the power source in response to the signal received from the positional sensor.

9. The energy storage device of one of the preceding claims, further comprising a Wi-Fi component configured to enable the energy storage device to communicate with a remote server.

10. An energy storage device for a bicycle comprising:
a housing rotatable between at least a first position and a second position;
at least one battery cell disposed in the housing;
a heat sink coupled to the housing, wherein the heat sink faces sideways and/or upwardly when the housing is in the first position, and wherein the heat sink faces downwardly when the housing is in the second position; and
an orientation sensor coupled to the housing and configured to sense when the housing is in the second position.

11. The energy storage device of claim 10, wherein the orientation sensor comprises an inertial measurement unit.

12. The energy storage device of claim 10 or 11, further comprising a charge controller disposed in the housing, wherein the orientation sensor is operably coupled to the charge controller, wherein the orientation sensor is configured to signal the charge controller when the housing is in the second position,
further comprising as an optional feature a power source electrically coupled to the at least one battery cell, wherein the charge controller is configured to derate a charge current supplied to the at least one battery cell from the power source in response to the signal received from the orientation sensor.

13. An energy storage device for a bicycle comprising:
a housing moveable between at least a first position and a second position;
at least one battery cell disposed in the housing;
a heat sink coupled to the housing, wherein the heat sink is positioned a distance less than or equal to 10 cm from a blocking component when the housing is in the second position; and
a proximity sensor coupled to the housing and configured to sense when the housing is in the second position.

14. The energy storage device of claim 13, wherein the proximity sensor comprises a capacitive sensor.

15. The energy storage device of claim 13 or 14, further comprising a charge controller disposed in the housing, wherein the proximity sensor is operably coupled to the charge controller, wherein the proximity sensor is configured to signal the charge controller when the housing is in the second position,
further comprising as an optional feature a power source electrically coupled to the at least one battery cell, wherein the charge controller is configured to derate a charge current supplied to the at least one battery cell from the power source in response to the signal received from the proximity sensor.
